(19) Europäisches Patentamt / European Patent Office / Office européen des brevets

(11) **EP 3 960 561 B1**

(12) **EUROPEAN PATENT SPECIFICATION**

(45) Date of publication and mention of the grant of the patent:
**25.12.2024 Bulletin 2024/52**

(21) Application number: **20799488.0**

(22) Date of filing: **24.04.2020**

(51) International Patent Classification (IPC):
**B60W 30/09** (2012.01)  **B60W 50/14** (2020.01)
**B60W 10/18** (2012.01)  **B60W 30/095** (2012.01)
**G01S 13/87** (2006.01)

(52) Cooperative Patent Classification (CPC):
**B60W 10/18; B60Q 9/008; B60W 30/09;
B60W 30/0956; B60W 50/14; G01S 13/878;
G01S 13/931;** B60W 2050/143; B60W 2420/408;
B60W 2420/54; B60W 2554/20; B60W 2554/80;
B60W 2556/35; G01S 2013/466; G01S 2013/93185;
(Cont.)

(86) International application number:
**PCT/CN2020/086686**

(87) International publication number:
**WO 2020/221123 (05.11.2020 Gazette 2020/45)**

(54) **VEHICLE CONTROL SYSTEM BASED ON HEIGHT OF OBSTACLE, AND VEHICLE**

FAHRZEUGSTEUERUNGSSYSTEM BASIEREND AUF DER HÖHE EINES HINDERNISSES UND FAHRZEUG

SYSTÈME DE COMMANDE DE VÉHICULE BASÉ SUR LA HAUTEUR D'UN OBSTACLE, ET VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.04.2019 CN 201910348817**

(43) Date of publication of application:
**02.03.2022 Bulletin 2022/09**

(73) Proprietor: **Yutong Bus Co., Ltd.**
**Zhengzhou, Henan 450061 (CN)**

(72) Inventors:
• **LIU, Guorong**
 **Zhengzhou, Henan 450061 (CN)**
• **SU, Changjun**
 **Zhengzhou, Henan 450061 (CN)**
• **HUANG, Kun**
 **Zhengzhou, Henan 450061 (CN)**
• **WANG, Hui**
 **Zhengzhou, Henan 450061 (CN)**

(74) Representative: **Gulde & Partner**
**Patent- und Rechtsanwaltskanzlei mbB**
**Wallstraße 58/59**
**10179 Berlin (DE)**

(56) References cited:
CN-A- 102 027 389    CN-A- 105 122 081
CN-A- 105 473 402    CN-A- 109 426 268
CN-U- 205 750 535    CN-U- 205 750 535
CN-U- 207 189 671    DE-A- 102015 100 719
DE-A- 102017 214 020   US-A- 5 714 928

(52) Cooperative Patent Classification (CPC): (Cont.)
G01S 2013/93271; G01S 2013/93272;
G01S 2013/93273

## Description

### TECHNICAL FIELD

The present invention relates to a vehicle control system based on height of obstacle and a vehicle, and belongs to the technical field of vehicle safety.

### BACKGROUND

Due to the structural designs of a vehicle, blind spots are inevitable when the driver is driving. In order to solve the problem caused by the vehicle blind spots, a radar and a camera are typically installed on the vehicle to establish a 360-degree surround view system. However, for coaches or buses, a blind spot is also formed in the height direction, which may be ignored by the driver. For example, when the vehicle passes through a height restriction bar or an overpass, or meets low tree branches extending above the road, the driver empirically estimates the height information, but it is more likely to cause accidents because of the limitation of the height-based blind spot. Therefore, a laser radar is designed to be installed at the front of the vehicle. For example, the Chinese invention patent application with the publication No. CN107632308A provides a contour detection method for a vehicle front barrier, the laser radar is installed at the front of the vehicle, and the measurement results of the laser radar are analyzed using the recursive superposition algorithm, so as to accurately obtain the contour height of the obstacle in front of the vehicle. Although this method can accurately obtain obstacle height information, the cost of utilizing the laser radar is high and the complicated data processing process may cause a delay of subsequent vehicle control.

Conventional vehicle control systems and vehicles including the same are disclosed in DE 10 2015 100719 A1.

### SUMMARY

An objective of the present invention is to provide a vehicle control system based on height of obstacle so as to solve the problems of high cost and complicated data processing of an existing control system due to the use of laser radar for obstacle height detection, and also provide a vehicle so as to solve the problems of high cost and complicated data processing of an existing vehicle due to the use of laser radar for obstacle height detection.

To achieve the above objectives, the present invention provides a vehicle control system based on height of obstacle. The present invention is directed to subject matter as defined in the appended set of claims.

Therefore, the present invention has the following beneficial effects: according to the system, the obstacle height can be detected through an upper range radar and a lower range radar which correspond to each other, the cost is greatly reduced, judgment is performed through fusion information of the two range radars, and data processing is simple, so that the vehicle can be controlled in time, and the obtained height difference or distance information between the obstacle and the vehicle is more accurate, further ensuring vehicle safety.

Further, there may be two groups of detection modules arranged at the front of the vehicle, namely, a first group of detection modules and a second group of detection modules, and a first range radar of the first group of detection modules and a first range radar of the second group of detection modules may be evenly distributed horizontally on the front roof of the vehicle.

Therefore, the present invention has the following beneficial effects: two groups of detection modules are arranged, so that obstacles around the vehicle can be detected comprehensively, the detection accuracy is improved, and more complicated data processing can be avoided without too many detection modules.

Further, the acquisition unit may further include at least one group of detection modules arranged at a rear of the vehicle, each group of detection modules may include a third range radar arranged on a rear roof of the vehicle and a fourth range radar arranged right at a rear of the vehicle vertically below the third range radar, and the third range radar and the corresponding fourth range radar may both be configured to detect an area behind the vehicle and the detection areas are partially overlapping.

Therefore, the present invention has the following beneficial effects: arranging the detection modules at the rear of the vehicle can avoid collisions with the obstacles when the vehicle is reversing, and the driving conditions of the vehicle are comprehensively considered, further ensuring vehicle safety.

Further, the execution unit may further include a braking system, and the processing unit may further be configured to control the braking system for forced braking if the vehicle does not decelerate after the alarm module gives an alarm.

Therefore, the present invention has the following beneficial effects: if the driver does not decelerate the vehicle after the alarm module gives an alarm, the vehicle is controlled for forced braking, further ensuring vehicle safety.

Further, when a highest point of the vehicle is higher than a front roof of the vehicle, the processing unit may further determine a difference value between the highest point of the vehicle and the front roof of the vehicle, control the alarm module in the execution unit to give an alarm if the height difference minus the difference value is less than the safety distance, control the alarm module in the execution unit to give an alarm if the height difference minus the difference value is less than 0, and control the braking system for forced braking if the vehicle does not decelerate after the alarm.

Therefore, the present invention has the following beneficial effects: various shapes of vehicles are taken into account comprehensively, corresponding control strategies are used for different vehicles, the application range is wide and the universality is strong.

Further, when a foremost point of the vehicle protrudes further than a front of the vehicle, the processing unit may further determine a difference value between the foremost point of the vehicle and the front of the vehicle, control the alarm module in the execution unit to give an alarm if the distance minus the difference value is less than the safety distance, and control the braking system for forced braking if the vehicle does not decelerate after the alarm.

Therefore, the present invention has the following beneficial effects: various shapes of vehicles are taken into account comprehensively, corresponding control strategies are used for different vehicles, the application range is wide and the versatility is strong.

Further, the processing unit may be a vehicle control unit.

Therefore, the present invention has the following beneficial effects: using the vehicle control unit as the processing unit of the control system can save certain space and cost for the vehicle.

Moreover, the present invention further provides a vehicle, including a body and a vehicle control system based on height of obstacle. A front roof of the vehicle and a rear roof of the vehicle are arranged on the body.

Therefore, the present invention has the following beneficial effects: according to the vehicle control system of the vehicle, the obstacle height can be detected through an upper range radar and a lower range radar which correspond to each other, the cost is greatly reduced, judgment is performed through fusion information of the two range radars, and data processing is simple, so that the vehicle can be controlled in time, and the obtained height difference or distance information between the obstacle and the vehicle is more accurate, further ensuring vehicle safety.

## BRIEF DESCRIPTION OF THE DRAWINGS

FIG. 1 is a structural diagram of a vehicle control system of the present invention;
FIG. 2a is a side view layout of a range radar of the present invention in a vehicle;
FIG. 2b is a top view layout of the range radar of the present invention in the vehicle;
FIG. 2c is a front view layout of the range radar of the present invention in a front end of the vehicle;
FIG. 3 is a control logic diagram of the vehicle control system of the present invention;
FIG. 4a is a principle control diagram of the present invention when an obstacle is above and in front of the vehicle; and
FIG. 4b is a principle control diagram of the present invention when the obstacle is right in front of the vehicle.

In the drawings, 1, 2, 3, 4, 5, 6, 7 and 8 are range radars.

## DETAILED DESCRIPTION OF THE EMBODIMENTS

An embodiment of an obstacle height-based vehicle control system:

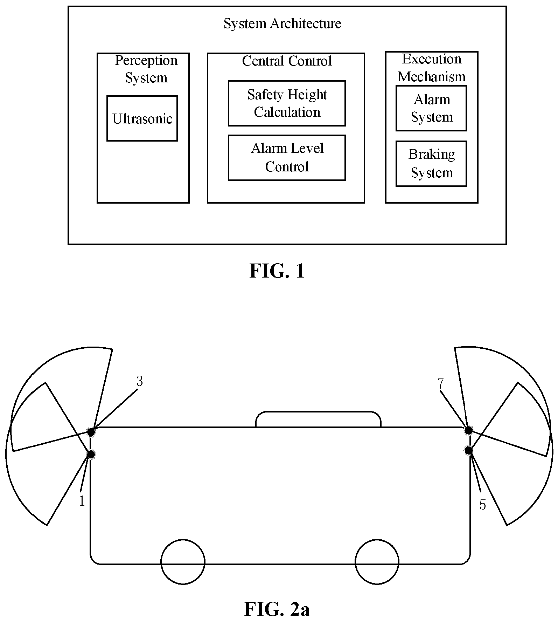

The obstacle height-based vehicle control system provided by the present embodiment has a system architecture as shown in FIG. 1 and includes an acquisition unit (i.e., a perception system in FIG. 1), a processing unit (i.e., a central control in FIG. 1) and an execution unit (i.e., an execution mechanism in FIG. 1). The acquisition unit is connected to a signal input end of the processing unit, and a signal output end of the processing unit is connected to the execution unit.

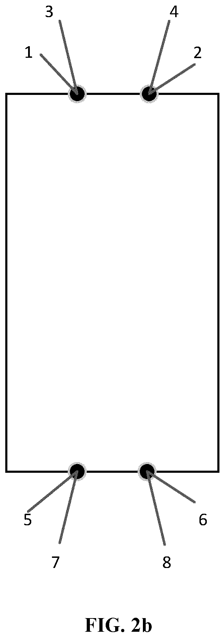

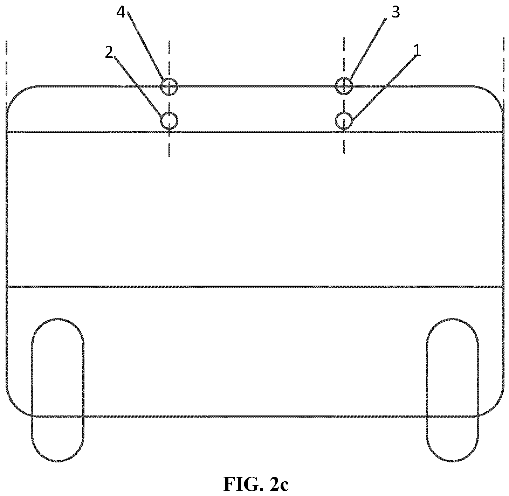

The acquisition unit includes 8 range radars as shown in FIG. 2a, FIG. 2b, and FIG. 2c, namely a range radar 1, a range radar 2, a range radar 3, a range radar 4, a range radar 5, a range radar 6, a range radar 7, and a range radar 8. The distribution of the acquisition unit in a vehicle is as follows: the range radar 1 and the range radar 3 belong to a first group of detection modules, the range radar 2 and the range radar 4 belong to a second group of detection modules, the range radar 5 and the range radar 7 belong to a third group of detection modules, and the range radar 6 and the range radar 8 belong to a fourth group of detection modules. The range radar 1, the range radar 2, the range radar 3, and the range radar 4 are arranged at a front of the vehicle, and the range radar 3 and the range radar 4 are evenly distributed horizontally on a front roof of the vehicle. The range radar 1 is arranged right at a front of the vehicle vertically below the range radar 3, and the range radar 2 is arranged right at the front of the vehicle vertically below the range radar 4. The range radar 5, the range radar 6, the range radar 7, and the range radar 8 are arranged at a rear of the vehicle, and the range radar 7 and the range radar 8 are evenly distributed horizontally on a rear roof of the vehicle. The range radar 5 is arranged right at a rear of the vehicle vertically below the range radar 7, and the range radar 6 is arranged right at the rear of the vehicle vertically below the range radar 8. The first group of detection modules and the second group of detection modules are configured to detect an area in front of the vehicle and the detection areas of the range radars in each group of detection modules are partially overlapping. The third group of detection modules and the fourth group of detection modules are configured to detect an area behind the vehicle and the detection areas of the range radars in each group of detection modules are partially overlapping. The processing unit is a vehicle control unit, and the execution unit is an alarm module (i.e., alarm system) and a braking system.

Generally, the spacing between the range radar 1 and the range radar 3, the range radar 2 and the range radar 4, the range radar 5 and the range radar 7, and the range radar 6 and the range radar 8 is the same, and a certain difference is also possible. However, there shall be an overlap between the detection areas of the range radars in each group of detection modules. The basis of there being an overlap between the detection areas is the distance between the range radars in each group of detection modules. The distance is determined by the ranging characteristics of the range radar, mainly the detection width of the range radar and the ranging detection angle. In the present embodiment, two groups of detection modules are distributed at the front and rear of the vehicle. The detection width of the used range radar is about 0.7 meter, the detection angle is at least 120°, and the installation angle between the range radar and the vehicle is 45° during installation of the range radar (the installation angle does not need to be exactly the same, as long as the detection areas are partially overlapping). Through such arrangement, 165° perception area at the front and rear of the roof is covered, and the greater the detection angle of the range radar, the greater the covered perception area. As other implementations, only one group of detection modules may be arranged at the front and rear of the vehicle, specifically, right in the middle of the front or rear of the vehicle, or three groups of detection modules may be arranged, and when only the obstacle in front of the vehicle needs to be detected, a detection module may be omitted from the rear of the vehicle.

The range radar has the advantage of short-range detection, so it can accurately perceive the obstacle at a short range, and return a value of the detection distance during working, but cannot accurately describe the position of the obstacle, so information of two range radars is fused to obtain the height difference information between the obstacle and the vehicle. In the present embodiment, an ultrasonic radar is used as the range radar, and as other implementations, a range radar such as a millimeter-wave radar may be used. The vehicle control unit includes a data processing module and an analysis and decision module. The processing module is configured to analyze and calculate the received information, and the analysis and decision module is configured to determine whether to give an alarm or perform braking control. The alarm module further includes a vehicle buzzer and an instrument display screen. When the alarm module gives an alarm (that is, the vehicle buzzer works), an alarm position is displayed on the instrument display screen to inform the driver. If the driver does not decelerate the vehicle or take other protective actions after the alarm, the braking system performs forced braking to decelerate and stop the vehicle.

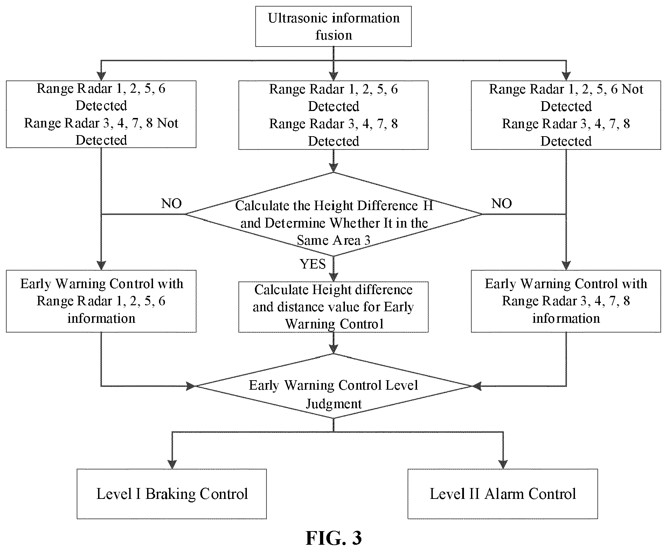

The vehicle control unit of the present invention fuses the information collected by multiple range radars, so as to accurately locate the height difference or distance information between the obstacle and the vehicle, and alarm or brake and decelerate through the execution mechanism. The specific control logic is as shown in FIG. 3.

1) After the vehicle is powered on, the control system performs a self-check to detect whether each range radar has reported a fault. If a fault is reported, the instrument gives a prompt to inform the driver that the system is abnormal and needs to be checked.

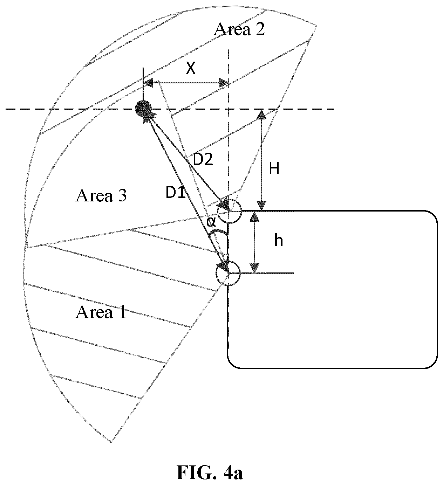

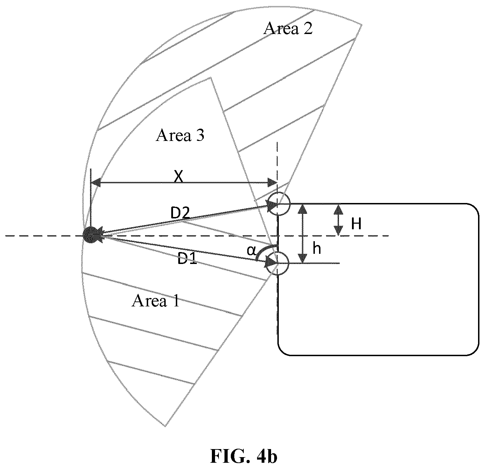

2) The range radars start to work to detect the distance of the obstacle. Since the detection principle of each group of detection modules is the same, a detection process of the first group of detection modules is taken as an example for the detailed description in the present embodiment. The detection principle is as shown in FIG. 4a and FIG. 4b. The area which can only be perceived by the range radar 3 is a second area (i.e., an area 2 in FIG. 4a and FIG. 4b), the area which can only be perceived by the range radar 1 is a first area (i.e., an area 1 in FIG. 4a and FIG. 4b), and the area which can be perceived by both the range radar 3 and the range radar 1 is a third area (i.e., an area 3 in FIG. 4a and FIG. 4b).

When the range radar 1 detects an obstacle, but the range radar 3 does not, it indicates that the obstacle is in the first area and affects the normal driving of the vehicle. The distance between the obstacle and the front end of the vehicle is calculated based on a detection distance D1, and a judgment and early warning control stage is entered.

When the range radar 3 detects an obstacle, but the range radar 1 does not, it indicates that the obstacle is in the second area and affects the normal driving of the vehicle. The height difference between the obstacle and the top end of the vehicle is calculated based on a detection distance D2, and a judgment and early warning control stage is entered.

When the range radar 1 and the range radar 3 both detect obstacles, there are two possibilities: 1) the obstacles are detected both in the first area and the second area respectively, and 2) an obstacle is detected in the third area. First, according to the situation of 2) the obstacle is detected in the third area, the position relationship between the obstacle and the vehicle is calculated to obtain a height difference H between the top of the vehicle and the obstacle. Since the height information of the obstacle does not change suddenly, if the calculated height difference basically remains unchanged in two periods before and after, it is considered to belong to the situation of 2), and the obstacle exists in the third area. If the calculated height difference changes, it is considered to belong to the situation of 1), and the obstacles are detected both in the first area and the second area respectively. Then corresponding early warning control is performed through D1 and D2 respectively.

When the obstacle is in the third area, the position relationship between the obstacle and the vehicle is as follows. According to the cosine law,

$$\cos\alpha = \frac{D1^2 + h^2 - D2^2}{2h * D1}, H = D1 * \cos\alpha - \text{h}, X = D1 * \sin\alpha.$$

h is the distance between the range radar 1 and the range radar 3, H is the height difference between the obstacle and the top end of the vehicle, X is the distance between the obstacle and the front end of the vehicle, D1 is an obstacle distance detected by the range radar 1, D2 is an obstacle distance detected by the range radar 3, and $\alpha$ is an included angle between a straight line from the obstacle to the range radar 1 and a vehicle front plane.

Since $\alpha$ in the triangle formed by D1, D2 and h may be an acute angle or an obtuse angle, the basis for determining whether the obstacle affects the passage of the vehicle can be obtained by judging the value of $D1 * \cos\alpha$ and h. When H>0, it indicates that the obstacle is higher than the top end of the vehicle at this time, and the height difference information is used for control. When H<0, it indicates that the obstacle is lower than the top end of the vehicle at this time, and the distance between the obstacle and the front end of the vehicle is used for control.

3) Due to the particularity of the vehicle, batteries or air conditioning hatches may be installed on the top of many vehicles, as a result, a highest point of the vehicle is higher than the top end of the front of the vehicle (i.e., the top end of the vehicle) by H'. At this time, H' is compared with the calculated height difference of H for control. If $H_0$=H-H'>T, it indicates that the vehicle can pass safely. T is a safety distance, and may be about 0.1 meters. If $H_0 \leq 0$, it indicates that the vehicle cannot pass.

According to $H_0$, the fault may be divided into two levels, namely level I fault and level II fault. When $0<H_0 \leq T$, the level II fault exists, the vehicle control unit controls the vehicle buzzer to send out a continuous alarm sound of "beep, beep, beep" to warn the driver that there are dangerous obstacles affecting the passage of the vehicle and prompt the driver to decelerate, and displays $H_0$ on the instrument display screen, and at this time, $H_0$ is a positive value. When $H_0 \leq 0$, the level I fault exists, the vehicle control unit controls the vehicle buzzer to prompt the driver to decelerate, and displays $H_0$ on the instrument display screen, and at this time, $H_0$ is a negative value. If the vehicle does not decelerate within set time, the vehicle braking system is controlled for forced braking.

4) The rear view mirror may extend out from the front end of some vehicles, as a result, a foremost point of the vehicle protrudes further than a front side of the vehicle (i.e., a front end of the vehicle) by X'. At this time, X' is compared with the obstacle distance of X for control. Likewise, the fault is divided into two levels, namely level I fault and level II fault. Since the measuring distance of the ultrasonic radar itself is relatively short, when obstacles affecting the operation is detected in front of the vehicle and X-X'≥D (D is a safety distance), the level II fault exists, the vehicle control unit controls the vehicle buzzer to prompt the driver to decelerate. When X-X'<D, the level I fault exists, the vehicle control unit controls the vehicle buzzer to prompt the driver to decelerate. If the vehicle does not decelerate within set time, the vehicle braking system is controlled for forced braking.

When the highest point of the vehicle is the top end of the vehicle, and the foremost point of the vehicle is the front end of the vehicle, the control strategies of the steps 3) or 4) may not be used, and a control strategy is implemented on the basis of the step 2), and is as follows: when H<T or X<D, the vehicle control unit controls the vehicle buzzer to prompt the driver to decelerate, and displays the value of H on the instrument display screen. If the vehicle does not decelerate within set time, the vehicle braking system is controlled for forced braking.

The above is the control strategy of the first group of detection modules. Similarly, the control strategies of the second group of detection modules, the third group of detection modules, and the fourth group of detection modules are the same. If an obstacle is detected by the range radar 1, the range radar 2, the range radar 3, and the range radar 4, but the height difference or distance obtained by the range radar 1 and the range radar 3 is different from the height difference or distance obtained by the range radar 2 and the range radar 4, the alarm level is judged respectively. The higher the alarm level, the higher the priority. The height difference or distance with higher priority is used for control.

In the present embodiment, in order to further ensure the safety of vehicle driving, the execution unit is the alarm module and the braking system, and the braking system may be omitted if it is ensured that the vehicle decelerates after the alarm.

In the present embodiment, in order to save vehicle space, the processing unit is the vehicle control unit, and as other implementations, the processing unit may also be a separate controller, as long as the above calculation and control of the detected data can be performed.

An embodiment of a vehicle:

The vehicle provided by the present embodiment includes a body and a vehicle control system based on height of obstacle. A front roof of the vehicle and a rear roof of the vehicle are arranged on the body. The structural component, installation

**EP 3 960 561 B1**

position, and control process of the vehicle control system based on height of obstacle have been introduced in the above embodiment of the vehicle control system based on height of obstacle, and therefore will not be repeated here.

**Claims**

1. A vehicle control system based on height of obstacle, **characterized in that** the vehicle control system comprising an acquisition unit, a processing unit and an execution unit, the execution unit comprises an alarm module; the acquisition unit comprises at least one group of detection modules arranged at a front of a vehicle; each group of detection modules comprises a first range radar (3, 4) arranged on a front roof of the vehicle and a second range radar (1, 2) arranged right at a front of the vehicle vertically below the first range radar (3, 4); the first range radar (3, 4) and the corresponding second range radar (1, 2) are both configured to detect an area in front of the vehicle and the detection areas are partially overlapping; the processing unit judges a height and distance between the vehicle and an obstacle according to obstacle information detected by the range radars;

   if the obstacle is detected by only one range radar in one group of detection modules, the height difference between the obstacle and the top end of the vehicle or the distance between the obstacle and the front end of the vehicle are calculated based on an obstacle distance detected by the range radar; and when the height difference between the vehicle and the obstacle or the distance between the obstacle and the front end of the vehicle is less than a safety distance, the alarm module in the execution unit is controlled to give an alarm; **characterized in that** if the obstacle information is detected by both the first range radar (3, 4) and the second range radar (1, 2) belonging to the same group of detection modules, a position relationship between the obstacle and the vehicle is calculated according to the obstacle detected in an overlapping detection area; an included angle (α) between a straight line from the obstacle to the second range radar (1, 2) and a vehicle front plane is calculated by using the law of cosine according to a height difference of an installation distance (h) between the first range radar (3, 4) and the second range radar (1, 2) in the group and an obstacle distance detected by the two range radars; then a height difference (H) between the obstacle and a top end of the vehicle is determined; if the height difference (H) does not change suddenly in two periods before and after, the obstacle is located in the overlapping detection area; when the height difference (H) >0, the obstacle is higher than the top end of the vehicle, when the height difference (H) <0, the obstacle is lower than the top end of the vehicle.

2. The vehicle control system based on height of obstacle according to claim 1, **characterized in that** two groups of detection modules are arranged at the front of the vehicle, comprising a first group of detection modules and a second group of detection modules, and a first range radar (3, 4) of the first group of detection modules and a first range radar (3, 4) of the second group of detection modules are evenly distributed horizontally on the front roof of the vehicle.

3. The vehicle control system based on height of obstacle according to claim 1, **characterized in that** the acquisition unit further comprises at least one group of detection modules arranged at a rear of the vehicle, each group of detection modules comprises a third range radar (7, 8) arranged on a rear roof of the vehicle and a fourth range radar (5, 6) arranged right at a rear of the vehicle vertically below the third range radar (7, 8), and the third range radar (7, 8) and the corresponding fourth range radar (5, 6) are both configured to detect an area behind the vehicle and the detection areas are partially overlapping.

4. The vehicle control system based on height of obstacle according to claim 1, **characterized in that** the execution unit further comprises a braking system, and the processing unit is further configured to control the braking system for forced braking if the vehicle does not decelerate after the alarm module gives an alarm.

5. The vehicle control system based on height of obstacle according to claim 4, **characterized in that** when a highest point of the vehicle is higher than a front roof of the vehicle, the processing unit further determines a difference value between the highest point of the vehicle and the front roof of the vehicle, the processing unit controls the alarm module in the execution unit to give an alarm if the height difference minus the difference value is less than the safety distance, the processing unit controls the alarm module in the execution unit to give an alarm if the height difference minus the difference value is less than 0, and the processing unit controls the braking system for forced braking if the vehicle does not decelerate after the alarm.

6. The vehicle control system based on height of obstacle according to claim 4, **characterized in that** when a foremost point of the vehicle protrudes further than a front of the vehicle, the processing unit further determines a difference value between the foremost point of the vehicle and the front of the vehicle, the processing unit controls the alarm module in the execution unit to give an alarm if the distance minus the difference value is less than the safety distance, and the processing unit controls the braking system for forced braking if the vehicle does not decelerate after the alarm.

7. The vehicle control system based on height of obstacle according to claim 1, **characterized in that** the processing unit is a vehicle control unit.

8. A vehicle, comprising a body and a vehicle control system according to any one of the preceding claims, the front roof of the vehicle and a rear roof of the vehicle are arranged on the body.

**Patentansprüche**

1. Auf der Höhe eines Hindernisses basierendes Fahrzeugsteuerungssystem, **dadurch gekennzeichnet, dass** das Fahrzeugsteuerungssystem eine Erfassungseinheit, eine Verarbeitungseinheit und eine Ausführungseinheit umfasst, wobei die Ausführungseinheit ein Alarmmodul umfasst; wobei die Erfassungseinheit mindestens eine Gruppe von Erfassungsmodulen umfasst, die an einer Front eines Fahrzeugs angeordnet sind; wobei jede Gruppe von Erfassungsmodulen Folgendes umfasst: ein erstes Bereichsradar (3, 4), das an einem vorderen Dach des Fahrzeugs angeordnet ist, und ein zweites Bereichsradar (1, 2), das rechts an einer Front des Fahrzeugs vertikal unterhalb des ersten Bereichsradars (3, 4) angeordnet ist; wobei das erste Bereichsradar (3, 4) und das entsprechende zweite Bereichsradar (1, 2) beide dazu ausgestaltet sind, einen Bereich vor dem Fahrzeug zu erfassen und wobei sich die Erfassungsbereiche teilweise überlappen; wobei die Verarbeitungseinheit eine Höhe und einen Abstand zwischen dem Fahrzeug und einem Hindernis gemäß durch die Bereichsradare erfassten Hindernisinformationen beurteilt;

   wobei, wenn das Hindernis nur durch ein Bereichsradar in einer Gruppe von Erfassungsmodulen erfasst wird, der Höhenunterschied zwischen dem Hindernis und dem oberen Ende des Fahrzeugs bzw. der Abstand zwischen dem Hindernis und dem vorderen Ende des Fahrzeugs auf der Grundlage eines durch das Bereichsradar erfassten Hindernisabstands berechnet wird; und wobei, wenn der Höhenunterschied zwischen dem Fahrzeug und dem Hindernis bzw. der Abstand zwischen dem Hindernis und dem vorderen Ende des Fahrzeugs weniger als ein Sicherheitsabstand ist, das Alarmmodul in der Ausführungseinheit so gesteuert wird, dass es einen Alarm ausgibt;
   **dadurch gekennzeichnet, dass**, wenn die Hindernisinformationen sowohl durch das erste Bereichsradar (3, 4) als auch durch das zweite Bereichsradar (1, 2), die zu derselben Gruppe von Erfassungsmodulen gehören, erfasst werden, eine Positionsbeziehung zwischen dem Hindernis und dem Fahrzeug gemäß dem in einem überlappenden Erfassungsbereich erfassten Hindernis berechnet wird; ein eingeschlossener Winkel ($\alpha$) zwischen einer Geraden vom Hindernis zum zweiten Bereichsradar (1, 2) und einer Frontebene des Fahrzeugs anhand des Kosinusgesetzes gemäß eines Höhenunterschieds eines Installationsabstands (h) zwischen dem ersten Bereichsradar (3, 4) und dem zweiten Bereichsradar (1, 2) in der Gruppe und einem durch die beiden Bereichsradare erfassten Hindernisabstand berechnet wird; anschließend ein Höhenunterschied (H) zwischen dem Hindernis und einem oberen Ende des Fahrzeugs bestimmt wird; wenn sich der Höhenunterschied (H) in zwei Perioden davor und danach nicht plötzlich ändert, sich das Hindernis im überlappenden Erfassungsbereich befindet; wenn der Höhenunterschied (H) > 0, das Hindernis höher als das obere Ende des Fahrzeugs ist, wenn der Höhenunterschied (H) < 0, das Hindernis niedriger als das obere Ende des Fahrzeugs ist.

2. Auf der Höhe eines Hindernisses basierendes Fahrzeugsteuerungssystem nach Anspruch 1, **dadurch gekennzeichnet, dass** an der Fahrzeugfront zwei Gruppen von Erfassungsmodulen angeordnet sind, die eine erste Gruppe von Erfassungsmodulen und eine zweite Gruppe von Erfassungsmodulen umfassen, und dass ein erstes Bereichsradar (3, 4) der ersten Gruppe von Erfassungsmodulen und ein erstes Bereichsradar (3, 4) der zweiten Gruppe von Erfassungsmodulen gleichmäßig horizontal am vorderen Dach des Fahrzeugs verteilt sind.

3. Auf der Höhe eines Hindernisses basierendes Fahrzeugsteuerungssystem nach Anspruch 1, **dadurch gekennzeichnet, dass** die Erfassungseinheit ferner mindestens eine Gruppe von Erfassungsmodulen umfasst, die an einem Heck des Fahrzeugs angeordnet sind, jede Gruppe von Erfassungsmodulen Folgendes umfasst: ein drittes Bereichsradar (7, 8), das an einem hinteren Dach des Fahrzeugs angeordnet ist, und ein viertes Bereichsradar (5, 6), das rechts an einem Heck des Fahrzeugs vertikal unterhalb des dritten Bereichsradars (7, 8) angeordnet ist, und das dritte Bereichsradar (7, 8) und das entsprechende vierte Bereichsradar (5, 6) beide dazu ausgestaltet sind, einen Bereich hinter dem Fahrzeug zu erfassen und wobei sich die Erfassungsbereiche teilweise überlappen.

4. Auf der Höhe eines Hindernisses basierendes Fahrzeugsteuerungssystem nach Anspruch 1, **dadurch gekennzeichnet, dass** die Ausführungseinheit ferner ein Bremssystem umfasst und die Verarbeitungseinheit ferner dazu ausgestaltet ist, das Bremssystem zur Zwangsbremsung zu steuern, wenn das Fahrzeug nicht abbremst, nachdem das Alarmmodul einen Alarm ausgegeben hat.

5. Auf der Höhe eines Hindernisses basierendes Fahrzeugsteuerungssystem nach Anspruch 4, **dadurch gekennzeichnet, dass**, wenn ein höchster Punkt des Fahrzeugs höher als ein vorderes Dach des Fahrzeugs liegt, die Verarbeitungseinheit ferner einen Differenzwert zwischen dem höchsten Punkt des Fahrzeugs und dem vorderen Dach des Fahrzeugs bestimmt, die Verarbeitungseinheit das Alarmmodul in der Ausführungseinheit so steuert, dass es einen Alarm ausgibt, wenn der Höhenunterschied abzüglich des Differenzwerts kleiner als der Sicherheitsabstand ist, die Verarbeitungseinheit das Alarmmodul in der Ausführungseinheit so steuert, dass es einen Alarm ausgibt, wenn der Höhenunterschied abzüglich des Differenzwerts kleiner als 0 ist, und die Verarbeitungseinheit das Bremssystem zur Zwangsbremsung steuert, wenn das Fahrzeug nach dem Alarm nicht abbremst.

6. Auf der Höhe eines Hindernisses basierendes Fahrzeugsteuerungssystem nach Anspruch 4, **dadurch gekennzeichnet, dass**, wenn ein vorderster Punkt des Fahrzeugs über eine Fahrzeugfront hinaus vorsteht, die Verarbeitungseinheit ferner einen Differenzwert zwischen dem vordersten Punkt des Fahrzeugs und der Fahrzeugfront bestimmt, die Verarbeitungseinheit das Alarmmodul in der Ausführungseinheit so steuert, dass es einen Alarm ausgibt, wenn der Abstand abzüglich des Differenzwerts kleiner als der Sicherheitsabstand ist, und die Verarbeitungseinheit das Bremssystem zur Zwangsbremsung steuert, wenn das Fahrzeug nach dem Alarm nicht abbremst.

7. Auf der Höhe eines Hindernisses basierendes Fahrzeugsteuerungssystem nach Anspruch 1, **dadurch gekennzeichnet, dass** es sich bei der Verarbeitungseinheit um eine Fahrzeugsteuerungseinheit handelt.

8. Fahrzeug, umfassend einen Körper und ein Fahrzeugsteuerungssystem nach einem der vorangehenden Ansprüche, wobei das vordere Dach des Fahrzeugs und ein hinteres Dach des Fahrzeugs am Körper angeordnet sind.

## Revendications

1. Système de commande de véhicule basé sur la hauteur d'un obstacle, **caractérisé en ce que** le système de commande de véhicule comprend une unité d'acquisition, une unité de traitement et une unité d'exécution, l'unité d'exécution comprend un module d'alarme ; l'unité d'acquisition comprend au moins un groupe de modules de détection agencé à l'avant d'un véhicule ; chaque groupe de modules de détection comprend un premier radar télémétrique (3, 4) agencé sur un toit avant du véhicule et un deuxième radar télémétrique (1, 2) agencé directement à l'avant du véhicule, verticalement sous le premier radar télémétrique (3, 4) ; le premier radar télémétrique (3, 4) et le second radar télémétrique (1, 2) correspondant sont tous deux conçus pour détecter une zone devant le véhicule et les zones de détection se chevauchent partiellement ; l'unité de traitement évalue une hauteur et distance entre le véhicule et un obstacle selon des informations d'obstacle détectées par les radars télémétriques ;
si l'obstacle est détecté par seulement un radar télémétrique dans un groupe de modules de détection, la différence de hauteur entre l'obstacle et l'extrémité supérieure du véhicule ou la distance entre l'obstacle et l'extrémité avant du véhicule sont calculées en fonction d'une distance d'obstacle détectée par le radar télémétrique ; et quand la différence de hauteur entre le véhicule et l'obstacle ou la distance entre l'obstacle et l'extrémité avant du véhicule est inférieure à une distance de sécurité, le module d'alarme dans l'unité d'exécution est commandé de façon à émettre une alarme ;
**caractérisé en ce que**, si les informations d'obstacle sont détectées par le premier radar télémétrique (3, 4) et le deuxième radar télémétrique (1, 2) appartenant au même groupe de modules de détection, une relation de position entre l'obstacle et le véhicule est calculée selon l'obstacle détecté dans une zone de détection commune ; un angle d'ouverture ($\alpha$) entre une ligne droite allant de l'obstacle au deuxième radar télémétrique (1, 2) et un plan avant du véhicule est calculé en utilisant la loi des cosinus selon une différence de hauteur d'une distance d'installation (h) entre le premier radar télémétrique (3, 4) et le deuxième radar télémétrique (1, 2) dans le groupe et une distance d'obstacle détectée par les deux radars télémétriques ; puis une différence de hauteur (H) entre l'obstacle et une extrémité supérieure du véhicule est déterminée ; si la différence de hauteur (H) ne change pas soudainement pendant deux périodes précédentes et suivantes, l'obstacle est situé dans la zone de détection commune ; quand la différence de hauteur (H) > 0, l'obstacle est plus haut que l'extrémité supérieure du véhicule, quand la différence de hauteur (H) < 0, l'obstacle est plus bas que l'extrémité supérieure du véhicule.

2. Système de commande de véhicule basé sur la hauteur d'un obstacle selon la revendication 1,

**caractérisé en ce que** deux groupes de modules de détection sont agencés à l'avant du véhicule, comprenant un premier groupe de modules de détection et un deuxième groupe de modules de détection, et un premier radar télémétrique (3, 4) du premier groupe de modules de détection et un premier radar télémétrique (3, 4) du deuxième groupe de modules de détection sont uniformément répartis horizontalement sur le toit avant du véhicule.

3. Système de commande de véhicule basé sur la hauteur d'un obstacle selon la revendication 1,
**caractérisé en ce que** l'unité d'acquisition comprend en outre au moins un groupe de modules de détection agencé à l'arrière du véhicule, chaque groupe de modules de détection comprend un troisième radar télémétrique (7, 8) agencé sur un toit arrière du véhicule et un quatrième radar télémétrique (5, 6) agencé directement à l'arrière du véhicule, verticalement sous le troisième radar télémétrique (7, 8), et le troisième radar télémétrique (7, 8) et le quatrième radar télémétrique (5, 6) correspondant sont tous deux conçus pour détecter une zone derrière le véhicule et les zones de détection se chevauchent partiellement.

4. Système de commande de véhicule basé sur la hauteur d'un obstacle selon la revendication 1,
**caractérisé en ce que** l'unité d'exécution comprend en outre un système de freinage, et l'unité de traitement est en outre conçue pour commander le système de freinage pour un freinage forcé si le véhicule ne décélère pas après que le module d'alarme a émis une alarme.

5. Système de commande de véhicule basé sur la hauteur d'un obstacle selon la revendication 4,
**caractérisé en ce que**, quand un point culminant du véhicule est plus haut qu'un toit avant du véhicule, l'unité de traitement détermine en outre une valeur de différence entre le point culminant du véhicule et le toit avant du véhicule, l'unité de traitement commande le module d'alarme dans l'unité d'exécution afin qu'il émette une alarme si la différence de hauteur moins la valeur de différence est inférieure à la distance de sécurité, l'unité de traitement commande le module d'alarme dans l'unité d'exécution afin qu'il émette une alarme si la différence de hauteur moins la valeur de différence est inférieure à 0, et l'unité de traitement commande le système de freinage pour un freinage forcé si le véhicule ne décélère pas après l'alarme.

6. Système de commande de véhicule basé sur la hauteur d'un obstacle selon la revendication 4,
**caractérisé en ce que**, quand un point le plus avancé du véhicule dépasse plus en avant que l'avant du véhicule, l'unité de traitement détermine en outre une valeur de différence entre le point le plus avancé du véhicule et l'avant du véhicule, l'unité de traitement commande le module d'alarme dans l'unité d'exécution afin qu'il émette une alarme si la distance moins la valeur de différence est inférieure à la distance de sécurité, et l'unité de traitement commande le système de freinage pour un freinage forcé si le véhicule ne décélère pas après l'alarme.

7. Système de commande de véhicule basé sur la hauteur d'un obstacle selon la revendication 1,
**caractérisé en ce que** l'unité de traitement est une unité de commande de véhicule.

8. Véhicule, comprenant une carrosserie et un système de commande de véhicule selon l'une quelconque des revendications précédentes, le toit avant du véhicule et un toit arrière du véhicule étant agencés sur la carrosserie.

System Architecture

| Perception System | Central Control | Execution Mechanism |
|---|---|---|

Ultrasonic

Safety Height Calculation

Alarm Level Control

Alarm System

Braking System

**FIG. 1**

**FIG. 2a**

**FIG. 2b**

EP 3 960 561 B1

FIG. 2c

Ultrasonic information
fusion

Range Radar 1, 2, 5, 6
Detected
Range Radar 3, 4, 7, 8 Not
Detected

Range Radar 1, 2, 5, 6
Detected
Range Radar 3, 4, 7, 8
Detected

Range Radar 1, 2, 5, 6 Not
Detected
Range Radar 3, 4, 7, 8
Detected

NO  Calculate the Height Difference H
and Determine Whether It in the
Same Area 3  NO

YES

Early Warning Control with
Range Radar 1, 2, 5, 6
information

Calculate Height difference
and distance value for Early
Warning Control

Early Warning Control with
Range Radar 3, 4, 7, 8
information

Early Warning Control Level
Judgment

Level I Braking Control

Level II Alarm Control

FIG. 3

**FIG. 4a**

**FIG. 4b**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 107632308 A
- DE 102015100719 A1